# EUROPEAN PATENT SPECIFICATION

(11) **EP 4 177 294 B1**
(45) Date of publication and mention of the grant of the patent: **11.06.2025**
(21) Application number: 22204605.4
(22) Date of filing: 31.10.2022
(51) Int. Cl.: C08G 65/26

(54) **PROCESSES FOR PRODUCING POLYOLS**
VERFAHREN ZUR HERSTELLUNG VON POLYOLEN
PROCÉDÉS DE PRODUCTION DE POLYOLS

(30) Priority: 05.11.2021 US 202163275991 P
(43) Date of publication of application: 10.05.2023
(73) Proprietor: Covestro LLC, Pittsburgh, PA 15205 (US)
(72) Inventor: Reese, Jack, Renfrew, 16053 (US); Wagner, Daniel, Pittsburgh, 15241 (US); Neal, Brian, Pittsburgh, 15241 (US)
(74) Representative: Levpat

(56) References cited:
- EP-A1- 1 528 073
- US-A- 4 355 188
- US-A- 5 689 012
- US-A1- 2004 064 001
- US-A1- 2007 129 577
- US-A1- 2013 059 936

## Description

### FIELD

This disclosure relates to processes for preparing polyols, such as polyether polyols.

### BACKGROUND

Polyether polyols having a relatively high content of primary hydroxyl (OH) groups are desired in many polyurethane applications. Conventionally, these polyether polyols are produced in two-steps. In a first step, all propylene oxide (or a mixture of propylene oxide and ethylene oxide) is polymerized, using a basic catalyst, such as potassium hydroxide, in the presence of a starter compound having active hydrogen atoms. This results in an intermediate polyether polyol having mainly secondary OH groups. In a second step, sometimes referred to as an "EO tip", ethylene oxide is then added to the intermediate polyether polyol, thereby converting the majority of the secondary OH groups into primary OH groups. In this process, the same basic catalyst (for example, KOH) is often used for the propoxylation reaction and for the ethoxylation reaction. Following production of the polyether polyol, the basic catalyst is often neutralized using an acid and the resulting salts are removed from the polyol, such as by filtration.

In many cases it is desirable to produce polyether polyols using double-metal cyanide (DMC) catalysts. This is often because, compared with the conventional production of polyether polyols by means of basic catalysts, use of DMC catalysts can result in a decrease in the content of monofunctional polyethers with terminal double bonds, so-called monols. The polyether polyols thus obtained can be processed to form high-quality polyurethanes (for example, elastomers, foams, coatings). In addition, DMC catalysts can possess an exceptionally high activity, thereby rendering it possible to produce polyether polyols at very low catalyst concentrations so that a separation of the catalyst from the polyol is no longer necessary.

One drawback of using DMC catalysts for the production of polyether polyols has been that with these catalysts, unlike basic catalysts, a direct EO tip can be difficult. This is because when ethylene oxide is added to a poly(oxypropylene) polyol containing a DMC catalyst, the result can be a heterogeneous mixture which consists for the most part of unreacted poly(oxypropylene) polyol (having mainly secondary OH groups) and a small extent of highly ethoxylated poly(oxypropylene) polyol and/or polyethylene oxide. As a result, in many cases, DMC catalyzed polyether polyols having a high content of primary OH groups are produced using a two-step process in which the EO tip is carried out in a second, separate step by means of conventional base catalysis.

One disadvantage of this two-step process is the expensive, energy intensive and time consuming removal of water from the DMC polyether polyol / aqueous basic catalyst mixture. (since the basic catalyst is introduced in the form of an aqueous solution of the catalyst, such as a 45% KOH solution). In addition, storage is required for the intermediate polymer, which involves significant capital and maintenance expense. Further, in order to fully react the water away a separate propylene oxide "drying step" is often needed prior to carrying out the EO tip, otherwise low functionality monol and/or glycol is produced. Such an additional step is, however, time consuming and energy intensive.

As a result, it would be desirable to provide processes and production plants capable of producing DMC-catalyzed polyether polyols having a high content of primary OH groups, in which the efficiency of the water removal process is improved. It would also be desirable to provide such a process that does not require the capacity to store the intermediate DMC-catalyzed polyether polyol prior to producing the final polyether polyol having a high content of primary OH groups. It would also be desirable that the process does not require use of a propylene oxide "drying step" to remove water from the reaction mixture prior to carrying out the EO tip.

EP 1528073 A1 relates to processes for preparing ethylene oxide (EO)-capped polyols in which removal of catalyst residues or salts formed by the neutralization of the basic catalyst is not required prior to discharging the polyol from the reactor because neutralization occurs during or after the starter charge of a subsequent batch.

US 2013/059936 A1 discloses a process for producing a polyoxyalkylene polyol having a high primary hydroxylation rate of the terminal hydroxyl groups, in spite of a low degree of total unsaturation and a low content of oxyethylene groups.

US 2004/064001 A1 is directed to a process for preparing ethylene oxide-capped polyols which involves combining a double-metal cyanide-catalyzed polyol with a basic catalyst.

US 5689012 A disclosing a continuous process for the preparation of polyoxyalkylene polyethers using DMC catalysts as the polyoxyalkylation catalyst employs continuous addition of alkylene oxide in conjunction with continuous addition of starter and catalyst to a continuous oxyalkylation reactor.

US 2007/129577 A1 relates to a process for the continuous preparation of polyether alcohols by reaction of alkylene oxides with H-functional starter substances in the presence of DMC catalysts, which comprises, at the beginning of the process a) firstly placing initial charge material and DMC catalyst in a reactor, b) metering in alkylene oxide so that the metering rate which is maintained for continuous operation of the reactor is reached in a time of from 100 to 3000 seconds, c) metering in starter substance during or after step b) so that the metering rate which is maintained for continuous operation of the reactor is reached in a time of from 5 to 500 seconds, d) after the fill level in the reactor which is desired for continuous operation of the reactor has been reached, taking product off continuously from the reactor while at the same time metering in starter substance and alkylene oxides in such an amount that the fill level in the reactor remains constant and metering in DMC catalyst so that the catalyst concentration necessary for continuous operation of the reactor is maintained in the reactor.

### SUMMARY

In some respects, this disclosure relates to processes for preparing a polyol. The processes comprise: (a) continuously producing an intermediate polyol in a first reactor by a process comprising: (1) introducing into the first reactor a mixture comprising a DMC catalyst and an initial starter, wherein the mixture is added in an amount sufficient to initiate polyoxyalkylation of the initial starter after introduction of alkylene oxide into the first reactor; (2) introducing alkylene oxide to the first reactor; (3) continuously introducing a continuously added starter into the first reactor; and (4) continuously introducing fresh DMC catalyst and/or further DMC catalyst/starter mixture to the first reactor such that catalytic activity of the DMC catalyst is maintained; (b) continuously discharging the intermediate polyol from the first reactor; (c) continuously mixing the intermediate polyol with an aqueous solutions of alkali metal to provide a mixture comprising the intermediate polyol, alkali metal and water; (d) continuously dehydrating the mixture comprising intermediate polyol, alkali metal and water, by continuously passing the mixture through one or more packed column, trayed column, falling film evaporator, wiped film evaporator, kettle evaporator, or flash tank, thereby continuously producing a dehydrated mixture comprising the intermediate polyol and the alkali metal; (e) transferring the dehydrated mixture to a second reactor; and (f) producing the polyol in the second reactor by feeding an alkylene oxide to the second reactor to thereby react the intermediate polyol with the alkylene oxide in the presence of the alkali metal, wherein the alkylene oxide fed to the second reactor comprises ethylene oxide in an amount sufficient to provide the polyol with an ethylene oxide cap in which up to 20% by weight of ethylene oxide is added as a cap, based on the total weight of the polyol produced in the second reactor.

In other respect, this specification relates to production plants for preparing a polyol. These production plants comprise: (a) a first reactor comprising: (1) an inlet in fluid communication with a source of alkylene oxide; (2) an inlet in fluid communication with a source of starter; (3) an inlet in fluid communication with a source of DMC catalyst; and (4) an outlet configured to continuously discharge an intermediate polyol from the first reactor; (b) a source of an aqueous solution of alkali metal in fluid communication with the outlet of the first reactor and configured to continuously add the aqueous solution of alkali metal to the intermediate polyol as it is continuously discharged from the first reactor, thereby producing a mixture comprising the intermediate polymer, the alkali metal and water; (c) a packed column comprising a polyol inlet and a polyol outlet, wherein the polyol inlet is in fluid communication with the outlet of the first reactor, wherein the packed column is configured to continuously remove water from the mixture comprising the intermediate polymer, the alkali metal and water, thereby producing a dehydrated mixture comprising the intermediate polyol and the alkali metal; (d) a second reactor comprising: (1) an inlet that is in fluid communication with the outlet of the packed column and configured to receive the dehydrated mixture comprising the intermediate polyol and the alkali metal; (2) an inlet in fluid communication with a source of alkylene oxide; and (3) an outlet configured to discharge the polyether polyol from the second reactor.

### BRIEF DESCRIPTION OF THE DRAWINGS

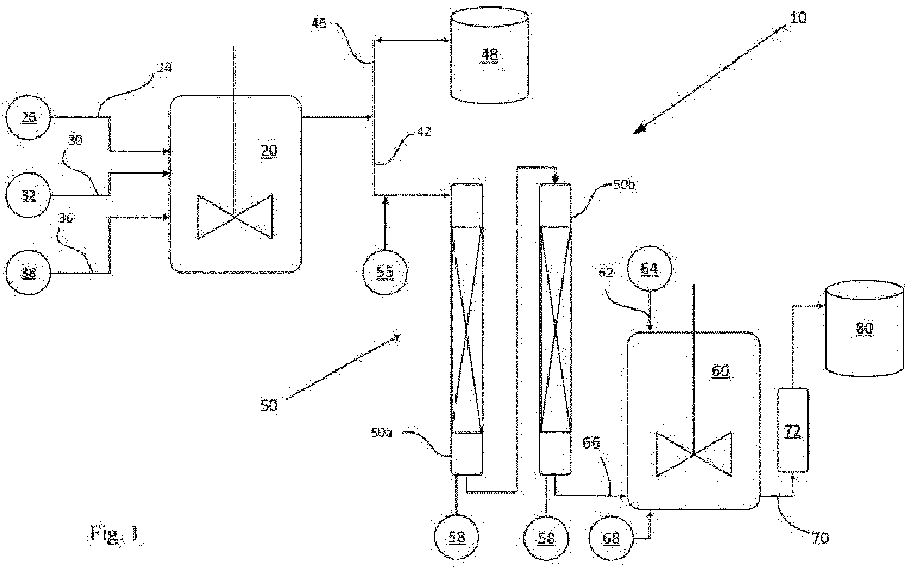

Fig. 1 schematically represents a production plant in accordance with embodiments of the inventions described in this specification.

### DETAILED DESCRIPTION

Various implementations are described and illustrated in this specification to provide an overall understanding of the structure, function, properties, and use of the disclosed inventions. It is understood that the various implementations described and illustrated in this specification are non-limiting and non-exhaustive. Thus, the inventions are not limited by the description of the various non-limiting and non-exhaustive implementations disclosed in this specification. Such modifications and variations are intended to be included within the scope of the claims.

In this specification, other than where otherwise indicated, all numerical parameters are to be understood as being prefaced and modified in all instances by the term "about", in which the numerical parameters possess the inherent variability characteristic of the underlying measurement techniques used to determine the numerical value of the parameter. At the very least, and not as an attempt to limit the application of the doctrine of equivalents to the scope of the claims, each numerical parameter described in the present description should at least be construed in light of the number of reported significant digits and by applying ordinary rounding techniques.

The grammatical articles "one", "a", "an", and "the", as used in this specification, are intended to include "at least one" or "one or more", unless otherwise expressly indicated. Thus, the articles are used in this specification to refer to one or more than one (i.e., to "at least one") of the grammatical objects of the article. By way of example, "a component" means one or more components, and thus, possibly, more than one component is contemplated and may be employed or used in an implementation of the described implementations. Further, the use of a singular noun includes the plural, and the use of a plural noun includes the singular, unless the context of the usage requires otherwise.

As used herein, the term "functionality" refers to the average number of reactive hydroxyl groups, -OH, present per molecule of the -OH functional material that is being described. In the production of polyurethane foams, the hydroxyl groups react with isocyanate groups, -NCO, that are attached to the isocyanate compound. The term "hydroxyl number" refers to the number of reactive hydroxyl groups available for reaction, and is expressed as the number of milligrams of potassium hydroxide equivalent to the hydroxyl content of one gram of the polyol (ASTM D4274-16). The term "equivalent weight" refers to the weight of a compound divided by its valence. For a polyol, the equivalent weight is the weight of the polyol that will combine with an isocyanate group, and may be calculated by dividing the molecular weight of the polyol by its functionality. The equivalent weight of a polyol may also be calculated by dividing 56,100 by the hydroxyl number of the polyol - Equivalent Weight (g/eq) = (56.1 x 1000)/OH number.

The processes and production plants of this specification will now be described with reference to Fig. 1. As indicated earlier, some embodiments of this specification relate to processes for preparing a polyol, such as a polyether polyol. These processes comprise continuously producing an intermediate polyol in a first reactor. The intermediate polyol can have, for example, a functionality of 2 to 8, such as 2 to 6 or 2 to 4, and a hydroxyl number of 10 to 500 mg KOH/g, such as 10 to 200 mg KOH/g, 10 to 100 mg KOH/g, or, in some cases, 20 to 50 mg KOH/g.

In the processes of this specification, the intermediate polyol is produced continuously. As used herein, the term "continuous" refers to a mode of addition of a relevant catalyst or reactant that maintains an effective concentration of the catalyst or reactant substantially continuously. Catalyst input, for example, may be truly continuous, or may be in relatively closely spaced increments. Likewise, continuous starter addition may be truly continuous, or may be incremental. Thus, it is possible to incrementally add a catalyst or reactant in such a manner that the added materials concentration decreases to essentially zero for some time prior to the next incremental addition. In some implementations, however, catalyst concentration is maintained at substantially the same level during the majority of the course of the continuous reaction and low molecular weight starter is present during the majority of the process. Incremental addition of catalyst and/or reactant which does not substantially affect the nature of the product is still "continuous" as that term is used herein. It is feasible, for example, to provide a recycle loop where a portion of the reacting mixture is back fed to a prior point in the process, thus smoothing out any discontinuities brought about by incremental additions.

Such continuous intermediate polyol production can be conducted using any of a variety of continuous reactors. For example, in some implementations, continuous intermediate polyol production can take place using a single stage continuous stirred tank reactor ("CSTR").

In particular, as shown in Fig. 1, production plant **10** may include a first reactor 20 that is a single stage CSTR. In this implementation, an inlet of CSTR **20** is in fluid communication, via line **24,** with a source of alkylene oxide **26,** an inlet of CSTR **20** is in fluid communication, via line **30,** with a source of H-functional starter **32,** and an inlet of CSTR **20** is in fluid communication, via line **36,** with a source of DMC catalyst **38.** The various afore-mentioned inlets to CSTR **20** may be the same inlet or they may be different inlets (such as is depicted in Fig. 1). CSTR **20** is configured to continuously discharge the intermediate polyol from CSTR **20.** As is apparent, an outlet of CSTR **20** is in fluid communication, via line **42,** with an inlet of a dehydration apparatus **50,** such as packed columns **50a** and **50b** shown in Fig. 1. Also, in this implementation, an outlet of CSTR **20** is in fluid communication, via line **46,** with intermediate polyol storage vessel **48,** which, in turn, is also in fluid communication, via line **42,** with an inlet of dehydration apparatus **50.** The presence of intermediate polyol storage vessel **48** may be particularly desirable in cases where second reactor **60** is a batch (or semi-batch) reactor. Further, an inlet of dehydration apparatus **50** is in fluid communication with a source of an aqueous solution of basic catalyst **55.** In the particular implementation depicted in Fig. 1, source of aqueous solution of basic catalyst **55** is in fluid communication with line **42,** thereby allowing the intermediate polyol being continuously discharged from CSTR **20** and/or intermediate polyol being discharged from intermediate polyol storage vessel **48** to mix with the aqueous solution of basic catalyst prior to the intermediate polyol entering dehydration apparatus **50.** An inlet of dehydration apparatus **50** is thus configured to continuously receive a mixture of aqueous solution of basic catalyst and intermediate polyol as intermediately polyol is continuously discharged from CSTR **20.** In addition, in this implementation, an inlet of dehydration apparatus **50** is configured to continuously receive intermediate polyol from intermediate polyol storage vessel **48.** As a result, in operation, dehydration apparatus **50** may continuously receive intermediate polyol from CSTR **20,** continuously receive intermediate polyol from intermediate polyol storage vessel **48,** or may continuously receive intermediate polyol from both CSTR **20** and intermediate polyol storage vessel **48** simultaneously. In any of these cases, the intermediate polyol can be mixed with aqueous solution of basic catalyst prior to entering dehydration apparatus **50.**

Aside from the single stage CSTR depicted in Fig. 1, the first reactor may comprise another type of continuous reactor, such as a two stage CSTR, a plug flow reactor, or a loop reactor (i.e., a reactor with internal and/or external recycling of substances, optionally with a heat exchanger arranged in the circulation), such as a stream loop reactor, a jet loop reactor, a Venturi loop reactor, a tube reactors configured in loop form with suitable devices for circulating the reaction mixture, or a loop of several tube reactors connected in series or several stirred tanks connected in series.

Regardless of the specific type of first reactor employed, the processes of this specification comprise continuously producing the intermediate polyol in the first reactor by a process comprising: (1) introducing into the first reactor a mixture comprising a DMC catalyst and an initial starter, wherein the mixture is added in an amount sufficient to initiate polyoxyalkylation of the initial starter after introduction of alkylene oxide into the first reactor; (2) introducing the alkylene oxide to the first polyol reactor; (3) continuously introducing a continuously added starter into the first reactor; and (4) continuously introducing fresh DMC catalyst and/or further DMC catalyst/further starter mixture to the first reactor such that catalytic activity of the DMC catalyst is maintained.

The starter(s) employed may be any compound having active hydrogen atoms. Suitable starters include, but are not limited to, compounds having a number average molecular weight of 18 to 2,000, such as 62 to 2,000, and having 1 to 8 hydroxyl groups. Specific examples of suitable starters include, but are not limited to, polyoxypropylene polyols, polyoxyethylene polyols, polytetatramethylene ether glycols, glycerol, propoxylated glycerols, propylene glycol, ethylene glycol, tripropylene glycol, trimethylol propane alkoxylated allylic alcohols, bisphenol A, pentaerythritol, sorbitol, sucrose, degraded starch, water and mixtures thereof.

In certain embodiments, the starter used to prepare the DMC catalyst/starter mixture introduced in the above-mentioned step (1) is an oligomeric starter, such as an oxyalkylated oligomer based on the same low molecular weight starter whose continuous addition is to be used in the above-mentioned step (3). For example, where propylene glycol is to be continuously added to the reactor in step (3), a suitable oligomeric starter useful in preparing the activated catalyst/starter mixture may be a 300 Da to 1,000 Da molecular weight polyoxypropylene glycol. The same oligomeric starter would also be suitable for use where dipropylene glycol and/or water are continuously added starters. In another example, where glycerin is a continuously added starter, an oxypropylated glycerine polyol having a molecular weight of 400 Da to 1,500 Da may advantageously be used in the above-mentioned step (1). In some implementations. however, a monomeric starter, such as ethylene glycol, propylene glycol, and the like, may be used. Thus, in some implementations, the starter used to prepare the catalyst/starter mixture in the above-mentioned step (1) may be the same as the continuously added starter used in the above-mentioned step (3).

In certain implementations, the continuously added starter may comprise water, ethylene glycol, diethylene glycol, triethylene glycol, propylene glycol, dipropylene glycol, tripropylene glycol, 1,2-, 1,3-, and/or 1,4-butylene glycol, neopentyl glycol, glycerin, trimethylolpropane, triethylolpropane, pentaerythritol, α-methylglucoside, hydroxymethyl-, hydroxyethyl-, and/or hydroxypropylglucoside, sorbitol, mannitol, sucrose, tetrakis [2 hydroxyethyl and/or 2-hydroxypropyl]ethylene diamine, as well as mixtures of any two or more thereof. Also suitable are monofunctional starters such as methanol, ethanol, 1-propanol, 2-propanol, n-butanol, 2-butanol, 2 ethylhexanol, and the like, as well as phenol, catechol, 4,4' dihydroxybiphenyl, and 4,4'-dihydroxydiphenylmethane, including mixtures of any two or more of the foregoing.

In some implementations, the continuously added starter comprises a polyoxyalkylene polymer or copolymer or suitable initiator for the production thereof, which has a molecular weight less than the desired product weight. Thus, the molecular weight of the continuously added starter may vary from 18 Da (water) to 45,000 Da (high molecular weight polyoxyalkylene polyol). In some implementations, the continuously added starter may comprise a starter having a molecular weight less than 1,000 Da, such as less than 500 Da, or less than 300 Da.

Alkylene oxides suitable for introduction in the afore-mentioned step (2) include, but are not limited to, ethylene oxide, propylene oxide, oxetane, 1,2- and 2,3-butylene oxide, isobutylene oxide, epichlorohydrin, cyclohexene oxide, styrene oxide, and the higher alkylene oxides such as the C₅-C₃₀ α-alkylene oxides. In some implementations, a mixture of propylene oxide and ethylene oxide may be used, such as those with high ethylene oxide content, *i.e.,* up to 85 mol percent. In some implementations, propylene oxide alone or a mixture of propylene oxide with ethylene oxide or another alkylene oxide is used. Other polymerizable monomers may be used as well, such as anhydrides and carbon dioxide.

The process for producing the intermediate polyol may employ any double metal cyanide (DMC) catalyst. DMC catalysts are non-stoichiometric complexes of a low molecular weight organic complexing agent and optionally other complexing agents with a double metal cyanide salt, such as zinc hexacyanocobaltate. Exemplary suitable DMC catalysts include those suitable for preparation of low unsaturation polyoxyalkylene polyether polyols, such as are disclosed in U.S. Pat. Nos. 3,427,256; 3,427,334; 3,427,335; 3,829,505; 4,472,560; 4,477,589; and 5,158,922. In some implementations, the DMC catalyst comprises one that is capable of preparing "ultra-low" unsaturation polyether polyols, such as are disclosed in U.S. Patent Nos. 5,470,813, 5,482,908, and 5,545 601.

The DMC catalyst concentration is desirably chosen to provide adequate control of the polyoxyalkylation reaction under the given reaction conditions. In some implementations, the DMC catalyst is used in an amount of 0.0005 to 1 % by weight, such as 0.001 to 0.1 % by weight, or, in some cases, 0.001 to 0.01 % by weight, based on the amount of polyether polyol to be produced.

An organic complexing ligand may be included with the DMC catalyst. Any organic complexing ligand may be part of the DMC catalyst, such as those described in U.S. Pat. Nos. 3,404,109, 3,829,505, 3,941,849, 5,158,922 and 5,470,813, EP 700 949, EP 761 708, EP 743 093, WO 97/40086 and JP 4145123. Such organic complexing ligands include water-soluble organic compounds with heteroatoms, such as oxygen, nitrogen, phosphorus or sulfur, which can form complexes with the DMC compound. In some implementations, the organic complexing ligand comprises an alcohol, aldehyde, ketone, ether, ester, amide, urea, nitrile, sulfide, or a mixture of any two or more thereof. In some implementations, the organic complexing ligands comprises a water-soluble aliphatic alcohol, such as, for example, ethanol, isopropanol, n-butanol, iso-butanol, sec-butanol, tert-butanol, or a mixture of any two or more thereof.

The DMC catalyst may contain a functionalized polymer. As used herein, the term "functionalized polymer" refers to a polymer or its salt that contains a functional group, such as oxygen, nitrogen, sulfur, phosphorus, halogen, or a mixture of any two or more thereof. Specific examples of suitable functionalized polymer include, but are not limited to, polyethers, polyesters, polycarbonates, polyalkylene glycol sorbitan esters, polyalkylene glycol glycidyl ethers, polyacrylamides, poly(acrylamide-co-acrylic acids), polyacrylic acids, poly(acrylic acid-co-maleic acids), poly(N-vinylpyrrolidone-co-acrylic acids), poly(acrylic acid-co-styrenes) and the salts thereof, maleic acids, styrenes and maleic anhydride copolymers and the salts thereof, block copolymers composed of branched chain ethoxylated alcohols, alkoxylated alcohols, polyether, polyacrylonitriles, polyalkyl acrylates, polyalkyl methacrylates, polyvinyl methyl ethers, polyvinyl ethyl ethers, polyvinyl acetates, polyvinyl alcohols, poly-N-vinylpyrrolidones, polyvinyl methyl ketones, poly(4-vinylphenols), oxazoline polymers, polyalkyleneimines, hydroxyethylcelluloses, polyacetals, glycidyl ethers, glycosides, carboxylic acid esters of polyhydric alcohols, bile acids and their salts, esters or amides, cyclodextrins, phosphorus compounds, unsaturated carboxylic acid esters and ionic surface- or interface-active compounds.

In some implementations, where used, functionalized polymer is present in the DMC catalyst in an amount of 2 to 80 % by weight, 5 to 70 % by weight, or, in some cases, 10 to 60 % by weight, based on the total weight of DMC catalyst.

The DMC catalyst may or may not be activated prior to use in the process of preparing the intermediate polyol. Activation, when desired, involves mixing the catalyst with a starter molecule having a desired number of oxyalkylatable hydrogen atoms, and adding alkylene oxide, preferably propylene oxide or other higher alkylene oxide under pressure and monitoring the reactor pressure. The reactor may be maintained at a temperature of, for example, 90°C to 150°C, 100°C to 140°C, or, in some cases, 110°C to 130°C. A noticeable pressure drop in the reactor indicates that the catalyst has been activated. The same alkylene oxide(s) as is to be employed in to produce the intermediate polyol may be used to prepare activated catalyst, or a different alkylene oxide may be employed. With higher alkylene oxides having low vapor pressure, a volatile alkylene oxide such as ethylene oxide, oxetane, 1,2-butylene oxide, 2,3-butylene oxide, or isobutylene oxide may be employed in lieu of or in conjunction with the higher alkylene oxide to facilitate pressure monitoring. Alternatively, other methods of measuring alkylene oxide concentration (GC, GC/MS, HPLC, etc.) may be used. A noticeable reduction in free alkylene oxide concentration indicates activation.

In some cases, however, "fresh" DMC catalyst may be employed without activation. "Fresh" catalyst as used herein is freshly prepared, non-activated DMC catalyst, *i.e.,* non-activated DMC catalyst in solid form or in the form of a slurry in low molecular weight starter, polyoxyalkylated low molecular weight starter, or a non-starter liquid. In some implementations, all or a substantial portion of the liquid phase of a fresh DMC catalyst mixture will include the same low molecular weight starter used for continuous starter addition, a polyoxyalkylated low molecular weight starter.

In some implementations, a portion of intermediate polyol may be cycled back to a catalyst activation reactor and employed for catalyst activation.

In preparing the intermediate polyol, according to some embodiments, the addition of starter is continuous in the sense that a concentration of low molecular weight starter and/or its low molecular weight oxyalkylated oligomers is maintained for a substantial portion of the total oxyalkylation. In a tube reactor, for example, starter may be introduced separately at numerous points along the reactor, or dissolved in alkylene oxide and introduced along the length of the reactor. In a CSTR, starter may be added to alkylene oxide, and may be added at numerous locations within the reactor. Low molecular weight starter need not even be present in the catalyst/starter mixture, which may employ a much higher molecular weight starter. By whatever method added, low molecular weight starter should be present for a substantial portion of oxyalkylation, such as 50% of oxyalkylation, 70% of the alkoxylation, or more. In some implementations. a low molecular weight starter concentration is maintained for a portion of the oxyalkylation which is effective to reduce the proportion of high molecular weight tail in the intermediate polyol product as compared what would be produced in a batch process where all starter is added at once.

The amount of continuously added starter may be increased to very high levels without unduly broadening molecular weight distribution. The continuously added starter may represent in excess of 90 equivalent percent of total starter, such as where the percentage of continuously added starter is 98 to 99+%. Despite the continuous addition of starter, polydispersity is generally below 1.7, such as below 1.3 to 1.4, or 1.05 to 1.20.

In preparing the intermediate polyol, it may desirable to have a small concentration of starter present in the reaction mixture at all times, although a final "cook out" to facilitate complete reaction of alkylene oxide may be performed without starter present. Continuous addition of as little as 1-2 equivalent percent of starter relative to total product weight may be effective to substantially eliminate the high molecular weight tail. However, despite the continuous addition of a very significant, and in some cases, major amount of low molecular weight starter, the molecular weight distribution is usually not significantly broadened and products of very low polydispersity are obtained.

As indicated, in some implementations, the continuous process of preparing the intermediate polyol involves establishing oxyalkylation conditions in a continuous reactor. Thus, when it is stated herein that a mixture comprising a DMC catalyst and an initial starter is introduced into the first reactor "in an amount sufficient to initiate polyoxyalkylation of the initial starter after introduction of alkylene oxide into the intermediate polyol reactor" it merely means that oxyalkylation conditions are established at some point in time. For example, an initial establishing of oxyalkylation conditions does not need repeating. Following establishment of oxyalkylation conditions, only the addition of alkylene oxide, continuously added starter, and further catalyst need be maintained.

Moreover, the term "starter' as employed in the phrase "DMC catalyst/initial starter" refers to an oxyalkylatable molecule of any molecular weight. This oxyalkylatable molecule may be a low molecular weight starter molecule having a molecular weight below about 300 Da, such as propylene glycol, dipropylene glycol, glycerin, a three mole oxypropylate of glycerin, etc., or may be a much higher molecular weight molecule, for example the product of desired product molecular weight.

Suitable processes and equipment for continuously producing the intermediate polyol are described in U.S. Patent No. 5,689,012 at col. 5, line 55 to col. 17, line 16.

As previously mentioned, the processes of this specification comprise continuously discharging the intermediate polyol from the first reactor and continuously mixing the intermediate polyol with an aqueous solution of an alkali metal alkoxide and/or an alkali metal hydroxide to provide a mixture comprising the intermediate polyol, an alkali metal, and water. Suitable alkali metal alkoxides include, for example, those that contain 1 to 4 carbon atoms in the alkyl radical. Specific examples of suitable alkali metal alkoxides are, without limitation, sodium methylate, sodium and potassium ethylate, potassium isopropylate and sodium butylate. Suitable alkali metal hydroxides include, for example, sodium hydroxide, cesium hydroxide, and potassium hydroxide. In some implementations, the amount of alkali metal alkoxide and/or an alkali metal hydroxide in the aqueous solution is 2 to 60% by weight, such as 10 to 60% by weight, 20 to 55% by weight, or 30 to 50% by weight, based on the total weight of the aqueous solution, with the remainder of the solution consisting essentially of water.

In some implementations, the aqueous solutions of an alkali metal alkoxide and/or an alkali metal hydroxide catalyst is used in an amount such that alkali metal is present in an amount of 0.01 to 5 % by weight, 0.2 to 3 % by weight, or, in some cases, 0.1 to 1.0 % by weight, based on the total weight of the polyol produced by the processes of this specification.

As indicated, the intermediate polyol is continuously mixed with the aqueous solution of an alkali metal alkoxide and/or an alkali metal hydroxide to provide a mixture comprising the intermediate polyol, an alkali metal, and water. In some implementations, such as the implementation depicted in Fig. 1, such mixing can be achieved by inline mixing of the aqueous solution of an alkali metal alkoxide and/or an alkali metal hydroxide with the intermediate polyol as it is continuously discharged from the first reactor. Such inline mixing may, if desired, be enhanced by the use of a mixing device, such as a static mixer or a jet mixer, that may be present at the injection point of the aqueous solution or downstream therefrom.

The processes of this specification further comprise continuously dehydrating the mixture comprising intermediate polyol, alkali metal, and water, thereby continuously producing a dehydrated mixture comprising the intermediate polyol and the alkali metal, though it should be understood that, while the dehydrated mixture will contain less water than the mixture prior to dehydration, such dehydration may not be complete, so that some water still remains in the mixture following the dehydration process. In some implementations, however, the water content of the dehydrated mixture is no more than 400 ppm, sometimes no more than 200 ppm.

According to the invention, the foregoing continuous dehydration of the mixture comprising intermediate polyol, alkali metal, and water may be accomplished by continuously passing the mixture through one or more packed columns, such as the two packed columns **50a** and **50b** arranged in series that is depicted in Fig. 1. In addition to packed columns or trayed columns, other dehydration apparatus' suitable for use in the processes of this specification can be readily envisaged, such as falling film evaporator, wiped film evaporator, kettle evaporator, flash tank, etc.

Thus, in some implementation, the dehydration is accomplished by passing a stripping gas through the mixture comprising intermediate polyol, alkali metal, and water, such that water is transferred to the stripping gas. In some implementations, a nitrogen-containing gas, such as nitrogen gas, is a suitable inert stripping gas. As a result, in some implementations, such as the implementation depicted in Fig. 1., an inlet of dehydration apparatus **50** is in fluid communication with a source of stripping gas **58,** such as a source of N₂ gas.

In some implementations, the foregoing dehydration may be accomplished by a desorption process in which water passes into the inert stripping gas because of partition equilibria between gas phase and liquid phase. Thus, in some cases, such desorption involves expelling water in an inert stripping gas stream, such as an N₂ gas stream. The stripping gas can, such as is depicted in Fig. 1, be fed countercurrent to the mixture comprising intermediate polyol, alkali metal, and water. Water migrates from the liquid phase into the gas phase.

Thus, in some cases, the dehydration of the mixture comprising intermediate polyol, alkali metal, and water is executed by passing the mixture countercurrent, *i.e.,* against the direction of flow of an inert stripping gas through one or more packed columns at, for example, reduced pressure and elevated temperatures. More specifically, in some implementations, the dehydration may be carried out at a temperature of 100 to 160°C, such as 130 to 150°C. In some implementations, the column(s) is operated at a pressure of from 1 to 100 mmHg (absolute), such as 1 to 5 mmHg (absolute).

The stripping gas may be fed to the packed column in any suitable amount to accomplish the desired level of dehydration. For example, in some implementations, the stripping gas is fed to the packed column in an amount of 0.002 kg to 0.006 kg of stripping gas per kg of the mixture comprising intermediate polyol, alkali metal, and water, such as 0.003 kg to 0.004 kg of stripping gas per kg of the mixture comprising intermediate polyol, alkali metal, and water.

Suitable packed columns for use in embodiments of the processes of this specification include any columns having internals with separation activity, such as trays, random packings and structured packings. Specific examples of trays include, but are not limited to, bubble trays, tunnel trays, valve trays, sieve trays, dual flow trays and grid trays.

Random packings include packing elements constructed of, for example, steel, stainless steel, copper, carbon, earthenware, porcelain, glass, plastic, or a combination thereof. Specific examples of suitable random packing structures are Raschig^{®} rings in which small pieces of tube to make a packing bed, Pall^{®} rings which are similar to Raschig^{®} rings but also include support structures and external surfacing texture within the ring walls, saddle rings, such as Berl^{®} saddles and Intalox^{®} saddles that are shaped like saddles, Lessing^{®} rings, which are made of ceramic and have internal partitions to increase surface area and enhance efficiency, and, Tri-Packs that has a spherical shape and interior ribs to maximize surface area and wetting.

As will be appreciated by the ordinary skilled artisan, structured packing is a type of packing that channels a liquid into a specific shape. Structured packing utilizes discs made of, for example, metal, plastic or porcelain, with the discs having an internal structure arranged into a type of honeycombed shape. Unlike random packing, structured packing are constructed of large pieces of material that contains holes, grooves, corrugation and other textured elements. Specific types of structured packing, which are suitable for use in the inventions of this specification include, but are not limited to, knitted wire structured packing, fabric packings, and corrugated sheet metal structured packing.

In some implementations, the foregoing dehydration may further comprise passing the mixture through an in-line molecular sieve that is arranged downstream of the packing column(s). As will be appreciated, molecular sieves are often constructed of zeolite, i.e., microporous aluminosilicates.

As indicated earlier, the processes of this specification further comprise transferring the dehydrated mixture to a second reactor and producing the polyether polyol in the second reactor by feeding an alkylene oxide to the second reactor to thereby react the intermediate polyol with the alkylene oxide in the presence of the alkali metal.

As shown in Fig. 1, in some implementation, an outlet of dehydration apparatus **50** is in fluid communication, via line **61,** with dehydrated mixture storage vessel **59,** which, in turn, is also in fluid communication, via line **66,** with an inlet of second reactor **60.** The presence of dehydrated mixture storage vessel **59** may be particularly desirable in cases where second reactor **60** is a batch (or semi-batch) reactor. In the particular implementation depicted in Fig. 1, therefore, dehydrated mixture discharged from dehydration apparatus **50** and/or dehydrated mixture from dehydrated mixture storage vessel **59** may be fed to second reactor **60.** As a result, in operation, second reactor **60** may receive dehydrated mixture continuously from dehydration apparatus **50,** receive dehydrated mixture from dehydrated mixture storage vessel **59,** or may receive dehydrated mixture from both dehydration apparatus **50** and dehydrated mixture storage vessel **59** simultaneously.

As a result, according to the processes of this specification, the intermediate polyol is used as a starter in preparing the polyol produced in the second reactor. In some implementations, the polyol produced in the second reactor is a "long chain" polyol that has a functionality of 2 to 6 and an equivalent weight of 1000 to 2000 Da, such as a functionality of 2 to 4 and an equivalent weight of 1500 to 2000 Da.

If desired, in addition to the intermediate polyol, other starters may be used to prepare the polyol produced in the second reactor. Such other starters may include, without limitation, low molecular weight starters such as glycerin, ethylene glycol, propylene glycol, diethylene glycol, dipropylene glycol, tripropylene glycol, trimethylolpropane, 1,3-butanediol, 1,4-butanediol, pentaerythritol, sorbitol, sucrose, ethylenediamine, and toluene diamine, among others, as well as combinations of two or more of the foregoing.

Suitable alkylene oxides that may fed to the second reactor according to implementations of the processes of this specification include, but are not limited to, ethylene oxide, propylene oxide, oxetane, 1,2- and 2,3-butylene oxide, isobutylene oxide, epichlorohydrin, cyclohexene oxide, styrene oxide, and the higher alkylene oxides such as the C₅ -C₃₀ α-alkylene oxides. In some implementations, propylene oxide, ethylene oxide, or a mixture of propylene oxide with ethylene oxide is used as the alkylene oxide fed to the second reactor. According to the invention, sufficient ethylene oxide is fed to the second reactor to provide the resulting polyol with an ethylene oxide "cap" in which up to 20% of ethylene oxide, such as 15 to 20% of ethylene oxide is added as a cap, such weight percents being based on the total weight of the final polyol produced in the second reactor.

In some implementations, the processes of this specification do not include a propylene oxide drying step to remove water from the reaction mixture prior to making the polyol in the second reactor.

The processes conditions used to make the polyol in the second reactor can vary. In some implementations, the dehydrated mixture described above is added to the second reactor and is heated to the desired reaction temperature, such as a temperature of 105°C to 130°C, and the alkylene oxide is added to the second reactor. In some implementations, the alkylene oxide is fed over 2 to 10 hours depending on the configuration and heat removal capabilities of the second reactor. After the total amount of alkylene oxide is fed, the reactor contents may be allowed to react further until the pressure in the reactor is level indicating no further change in the amount of oxide present. The final polyol is then refined to remove the alkali metal, such as by acid neutralization followed by filtration, treatment with solid adsorbents, treatment with solid inorganic compounds and treatment with ion exchanges resins.

The second reactor may be of any configuration, such as batch, semi-batch, or a continuous reactor. In some implementations, however, the second reactor is, as is illustrated in Fig. 1, a batch.

In particular, as shown in Fig. 1, production plant **10** may include a second reactor **60** that is a batch reactor. In this implementation, an inlet of reactor **60** is in fluid communication, via line **62,** with a source of alkylene oxide **64,** an inlet of reactor **60** is in fluid communication, via line **66,** with an outlet of dehydration apparatus **50,** and, in some cases, an inlet of reactor **60** is in communication with a source of H-functional starter **68** (the source of H-functional starter **68** may be the same as source of H-functional starter **32** or it may be a different source of H-functional starter). The various afore-mentioned inlets to reactor **60** may be the same inlet or they may be different inlets (such as is depicted in Fig. 1). reactor **60** is configured to discharge polyol from reactor **60.** As is apparent, an outlet of reactor **60** is in fluid communication, via line **70,** with an inlet of a polyol work-up system **72.** Polyol work-up system **72** includes means for removing alkali metal from the polyol exiting reactor **60,** such means may include, for example, treatment with an ion-exchange resin, liquid-liquid extraction, or treatment with an absorbent, such as magnesium silicate. Suitable methods for working-up the polyol exiting reactor **60** are described in U.S. Patent Nos. 3,715,402; 3,823,145; 4,721,818; 4,355,188 and 5,563,221. Polyol work-up system **72** can be in fluid communication with polyol storage **80.**

The processes and production plants of this specification are currently believed to provide several advantages. First, it is believe that they are capable of producing DMC-catalyzed polyether polyols having a high content of primary OH groups, in which the efficiency (in terms of energy reduction and reduced time) and consistency of the water removal in the process is improved. Second, they do not require the capacity to store the intermediate DMC-catalyzed polyether polyol prior to producing the final polyether polyol having a high content of primary OH groups. Third, it is believed that they can eliminate the need for a propylene oxide drying step to remove water from the reaction mixture prior to carrying out the EO tip.

## Claims

1. A process for preparing a polyol, comprising:
a) continuously producing an intermediate polyol in a first reactor by a process comprising:
(1) introducing into the first reactor a mixture comprising a DMC catalyst and an initial starter, wherein the mixture is added in an amount sufficient to initiate polyoxyalkylation of the initial starter after introduction of alkylene oxide into the first reactor;
(2) introducing alkylene oxide to the first reactor;
(3) continuously introducing a continuously added starter into the first reactor; and
(4) continuously introducing fresh DMC catalyst and/or further DMC catalyst/further starter mixture to the first reactor such that catalytic activity of the DMC catalyst is maintained;
b) continuously discharging the intermediate polyol from the first reactor;
c) continuously mixing the intermediate polyol with an aqueous solution of alkali metal to provide a mixture comprising the intermediate polyol, alkali metal, and water;
d) continuously dehydrating the mixture comprising intermediate polyol, alkali metal, and water, by continuously passing the mixture through one or more packed column, trayed column, falling film evaporator, wiped film evaporator, kettle evaporator, or flash tank, thereby continuously producing a dehydrated mixture comprising the intermediate polyol and the alkali metal;
e) transferring the dehydrated mixture to a second reactor; and
f) producing the polyol in the second reactor by feeding an alkylene oxide to the second reactor to thereby react the intermediate polyol with the alkylene oxide in the presence of the alkali metal, wherein the alkylene oxide fed to the second reactor comprises ethylene oxide in an amount sufficient to provide the polyol with an ethylene oxide cap in which up to 20% by weight of ethylene oxide is added as a cap, based on the total weight of the polyol produced in the second reactor.

2. The process of claim 1, wherein the first reactor comprises a single stage continuous stirred tank reactor.

3. The process of claim 1 or claim 2, wherein the starter used to prepare the mixture comprising the DMC catalyst and the initial starter is the same as the continuously added starter.

4. The process of any one of claim 1 to claim 3, wherein the alkylene oxide introduced to the first reactor comprises propylene oxide.

5. The process of any one of claim 1 to claim 4, wherein the aqueous solution of alkali metal comprises an alkali metal alkoxide and/or a alkali metal hydroxide where the amount of alkali metal alkoxide and/or an alkali metal hydroxide in the aqueous solution is 2 to 60% by weight, based on the total weight of the aqueous solution.

6. The process of any one of claim 1 to claim 5, wherein the intermediate polyol is continuously mixed with the aqueous solution of an alkali metal by inline mixing of the aqueous solution of an alkali metal with the intermediate polyol as it is continuously discharged from the first reactor.

7. The process of any one of claim 1 to claim 6, wherein the water content of the dehydrated mixture comprising the intermediate polyol and the alkali metal is no more than 400 ppm.

8. The process of any one of claim 1 to claim 7, wherein the continuous dehydration of the mixture comprising intermediate polyol, alkali metal, and water comprises continuously passing the mixture through one or more packed columns.

9. The process of claim 8, wherein the continuous dehydration comprises passing the mixture comprising intermediate polyol, alkali metal, and water countercurrent to the direction of flow of an inert stripping gas through the one or more packed columns at a temperature of 100 to 160°C and a pressure of 1 to 100 mmHg (absolute).

10. The process of claim 9, further comprising passing the dehydrated mixture through an in-line molecular sieve arranged downstream of the packed column.

11. The process of any one of claim 1 to claim 10, wherein the polyol produced in the second reactor has a functionality of 2 to 6 and an equivalent weight of 1000 to 2000 Da.

12. The process of any one of claim 1 to claim 11, wherein the process does not include a propylene oxide drying step to remove water from the reaction mixture prior to making the polyol in the second reactor.

13. The process of any one of claim 1 to claim 12, wherein the polyol is prepared in the second reactor by a process comprising:
(1) adding the dehydrated mixture to the second reactor;
(2) heating the dehydrated to a desired reaction temperature,
(3) adding the alkylene oxide to the second reactor over a period of 2 to 10 hours, and
(4) after the total amount of alkylene oxide is fed, allowing the reactor contents to react further until the pressure in the reactor is level.

14. The process of any one of claim 1 to claim 13, wherein the second reactor comprises a batch reactor.

## Patentansprüche

1. Verfahren zur Herstellung eines Polyols, umfassend:
a) kontinuierliches Herstellen eines intermediären Polyols in einem ersten Reaktor durch ein Verfahren, das Folgendes umfasst:
(1) Einführen eines Gemischs, das einen DMC-Katalysator und einen Anfangsstarter umfasst, in den ersten Reaktor, wobei das Gemisch in einer Menge zugegeben wird, die ausreicht, um die Polyoxyalkylierung des Anfangsstarters nach Einführen von Alkylenoxid in den ersten Reaktor auszulösen;
(2) Einführen von Alkylenoxid in den ersten Reaktor;
(3) kontinuierliches Einführen eines kontinuierlich zugegebenen Starters in den ersten Reaktor; und
(4) kontinuierliches Einführen von frischem DMC-Katalysator und/oder weiterem DMC-Katalysator/weiterem Startergemisch in den ersten Reaktor, so dass katalytische Aktivität des DMC-Katalysators aufrechterhalten bleibt;
b) kontinuierliches Ableiten des intermediären Polyols aus dem ersten Reaktor;
c) kontinuierliches Mischen des intermediären Polyols mit einer wässrigen Lösung von Alkalimetall, um ein Gemisch, das das intermediäre Polyol, Alkalimetall und Wasser umfasst, bereitzustellen;
d) kontinuierliches Dehydratisieren des Gemischs, das intermediäres Polyol, Alkalimetall und Wasser umfasst, durch kontinuierliches Leiten des Gemischs durch eine(n) oder mehrere gepackte Kolonnen, Bodenkolonnen, Fallfilmverdampfer, Dünnschichtverdampfer, Kesselverdampfer oder Flash-Tanks, um kontinuierlich ein dehydratisiertes Gemisch herzustellen, das das intermediäre Polyol und das Alkalimetall umfasst;
e) Überführen des dehydratisierten Gemischs in einen zweiten Reaktor; und
f) Herstellen des Polyols in dem zweiten Reaktor durch Zuführen eines Alkylenoxids zu dem zweiten Reaktor, um dadurch das intermediäre Polyol mit dem Alkylenoxid in Gegenwart des Alkalimetalls umzusetzen, wobei das Alkylenoxid, das dem zweiten Reaktor zugeführt wird, Ethylenoxid in einer Menge umfasst, die ausreicht, um das Polyol mit einer Ethylenoxidkappe zu versehen, wobei bis zu 20 Gew.-% an Ethylenoxid als Kappe zugegeben werden, bezogen auf das Gesamtgewicht des in dem zweiten Reaktor hergestellten Polyols.

2. Verfahren nach Anspruch 1, wobei der erste Reaktor einen einstufigen kontinuierlichen Rührkesselreaktor umfasst.

3. Verfahren nach Anspruch 1 oder Anspruch 2, wobei der Starter, der zur Herstellung des Gemischs, das den DMC-Katalysator und den Anfangsstarter umfasst, verwendet wird, der gleiche ist wie der kontinuierlich zugegebene Starter.

4. Verfahren nach einem von Anspruch 1 bis Anspruch 3, wobei das in den ersten Reaktor eingeführte Alkylenoxid Propylenoxid umfasst.

5. Verfahren nach einem von Anspruch 1 bis Anspruch 4, wobei die wässrige Lösung von Alkalimetall ein Alkalimetallalkoxid und/oder ein Alkalimetallhydroxid umfasst, wobei die Menge an Alkalimetallalkoxid und/oder einem Alkalimetallhydroxid in der wässrigen Lösung 2 bis 60 Gew.-%, bezogen auf das Gesamtgewicht der wässrigen Lösung, beträgt.

6. Verfahren nach einem von Anspruch 1 bis Anspruch 5, wobei das intermediäre Polyol kontinuierlich mit der wässrigen Lösung eines Alkalimetalls durch Inline-Mischen der wässrigen Lösung eines Alkalimetalls mit dem intermediären Polyol, während es kontinuierlich aus dem ersten Reaktor abgeleitet wird, gemischt wird.

7. Verfahren nach einem von Anspruch 1 bis Anspruch 6, wobei der Wassergehalt des dehydratisierten Gemischs, das das intermediäre Polyol und das Alkalimetall umfasst, nicht mehr als 400 ppm beträgt.

8. Verfahren nach einem von Anspruch 1 bis Anspruch 7, wobei die kontinuierliche Dehydratisierung des Gemischs, das intermediäres Polyol, Alkalimetall und Wasser umfasst, kontinuierliches Leiten des Gemischs durch eine oder mehrere gepackte Kolonnen umfasst.

9. Verfahren nach Anspruch 8, wobei die kontinuierliche Dehydratisierung Leiten des Gemischs, das intermediäres Polyol, Alkalimetall und Wasser umfasst, im Gegenstrom zu der Strömungsrichtung eines inerten Strippgases durch die eine oder mehreren gepackten Kolonnen bei einer Temperatur von 100 bis 160 °C und einem Druck von 1 bis 100 mmHg (absolut) umfasst.

10. Verfahren nach Anspruch 9, ferner umfassend Leiten des dehydratisierten Gemischs durch ein Inline-Molekularsieb, das stromabwärts der gepackten Kolonne angeordnet ist.

11. Verfahren nach einem von Anspruch 1 bis Anspruch 10, wobei das in dem zweiten Reaktor hergestellte Polyol eine Funktionalität von 2 bis 6 und ein Äquivalentgewicht von 1000 bis 2000 Da aufweist.

12. Verfahren nach einem von Anspruch 1 bis Anspruch 11, wobei das Verfahren keinen Propylenoxid-Trocknungsschritt zum Entfernen von Wasser aus dem Reaktionsgemisch vor der Herstellung des Polyols in dem zweiten Reaktor enthält.

13. Verfahren nach einem von Anspruch 1 bis Anspruch 12, wobei das Polyol in dem zweiten Reaktor durch ein Verfahren hergestellt wird, das Folgendes umfasst:
(1) Zugeben des dehydratisierten Gemischs zu dem zweiten Reaktor;
(2) Erhitzen des Dehydratisierten auf eine gewünschte Reaktionstemperatur,
(3) Zugeben des Alkylenoxids zu dem zweiten Reaktor über einen Zeitraum von 2 bis 10 Stunden, und
(4) nach Einspeisen der Gesamtmenge von Alkylenoxid Erlauben, dass der Reaktorinhalt weiter reagiert, bis der Druck in dem Reaktor konstant ist.

14. Verfahren nach einem von Anspruch 1 bis Anspruch 13, wobei der zweite Reaktor einen Batch-Reaktor umfasst.

## Revendications

1. Procédé de préparation d'un polyol, comprenant :
a) produire en continu un polyol intermédiaire dans un premier réacteur par un procédé comprenant :
(1) introduire dans le premier réacteur un mélange comprenant un catalyseur DMC et un amorceur initial, le mélange étant ajouté en une quantité suffisante pour initier une polyoxyalkylation de l'amorceur initial après introduction d'oxyde d'alkylène dans le premier réacteur ;
(2) introduire de l'oxyde d'alkylène dans le premier réacteur ;
(3) introduire en continu un amorceur ajouté en continu dans le premier réacteur ; et
(4) introduire en continu un catalyseur DMC frais et/ou un autre catalyseur DMC/un mélange d'amorceur supplémentaire dans le premier réacteur de sorte que l'activité catalytique du catalyseur DMC soit maintenue ;
b) décharger en continu le polyol intermédiaire du premier réacteur ;
c) mélanger en continu le polyol intermédiaire avec une solution aqueuse de métal alcalin pour fournir un mélange comprenant le polyol intermédiaire, le métal alcalin et l'eau ;
d) déshydrater en continu le mélange comprenant un polyol intermédiaire, un métal alcalin et de l'eau, en faisant passer en continu le mélange à travers une ou plusieurs colonnes garnies, une colonne à plateaux, un évaporateur à film tombant, un évaporateur à film essuyé, un évaporateur à bouilloire, ou un réservoir de détente, produisant ainsi en continu un mélange déshydraté comprenant le polyol intermédiaire et le métal alcalin ;
e) transférer le mélange déshydraté dans un deuxième réacteur ; et
f) produire le polyol dans le second réacteur en introduisant un oxyde d'alkylène dans le second réacteur pour faire ainsi réagir le polyol intermédiaire avec l'oxyde d'alkylène en présence du métal alcalin, l'oxyde d'alkylène introduit dans le second réacteur comprenant de l'oxyde d'éthylène en une quantité suffisante pour doter le polyol d'une coiffe d'oxyde d'éthylène dans laquelle jusqu'à 20 % en poids d'oxyde d'éthylène est ajouté comme coiffe, sur la base du poids total du polyol produit dans le deuxième réacteur.

2. Procédé selon la revendication 1, dans lequel le premier réacteur comprend un réacteur à cuve agitée continue à un étage.

3. Procédé selon la revendication 1 ou la revendication 2, dans lequel l'amorceur utilisé pour préparer le mélange comprenant le catalyseur DMC et l'amorceur initial est le même que l'amorceur ajouté en continu.

4. Procédé selon l'une quelconque parmi les revendications 1 à 3, dans lequel l'oxyde d'alkylène introduit dans le premier réacteur comprend de l'oxyde de propylène.

5. Procédé selon l'une quelconque parmi les revendications 1 à 4, dans lequel la solution aqueuse de métal alcalin comprend un alcoxyde de métal alcalin et/ou un hydroxyde de métal alcalin dans lequel la quantité d'alcoxyde de métal alcalin et/ou d'hydroxyde de métal alcalin dans la solution aqueuse est de 2 à 60 % en poids, par rapport au poids total de la solution aqueuse.

6. Procédé selon l'une quelconque parmi les revendications 1 à 5, dans lequel le polyol intermédiaire est mélangé en continu avec la solution aqueuse d'un métal alcalin par mélange en ligne de la solution aqueuse d'un métal alcalin avec le polyol intermédiaire lorsqu'il est déchargé en continu du premier réacteur.

7. Procédé selon l'une quelconque parmi les revendications 1 à 6, dans lequel la teneur en eau du mélange déshydraté comprenant le polyol intermédiaire et le métal alcalin n'est pas supérieure à 400 ppm.

8. Procédé selon l'une quelconque parmi les revendications 1 à 7, dans lequel la déshydratation continue du mélange comprenant un polyol intermédiaire, un métal alcalin et de l'eau comprend le passage en continu du mélange à travers une ou plusieurs colonnes garnies.

9. Procédé selon la revendication 8, dans lequel la déshydratation continue comprend le passage du mélange comprenant un polyol intermédiaire, un métal alcalin et de l'eau à contre-courant de la direction d'écoulement d'un gaz de stripage inerte à travers la ou les colonnes garnies à une température de 100 à 160°C et une pression de 1 à 100 mmHg (absolue).

10. Procédé selon la revendication 9, comprenant en outre le passage du mélange déshydraté à travers un tamis moléculaire en ligne disposé en aval de la colonne garnie.

11. Procédé selon l'une quelconque parmi les revendications 1 à 10, dans lequel le polyol produit dans le second réacteur a une fonctionnalité de 2 à 6 et un poids équivalent de 1 000 à 2 000 Da.

12. Procédé selon l'une quelconque parmi les revendications 1 à 11, dans lequel le procédé ne comprend pas d'étape de séchage d'oxyde de propylène pour éliminer de l'eau du mélange réactionnel avant de préparer le polyol dans le second réacteur.

13. Procédé selon l'une quelconque parmi les revendications 1 à 12, dans lequel le polyol est préparé dans le second réacteur par un procédé comprenant :
(1) ajouter le mélange déshydraté au deuxième réacteur ;
(2) chauffer le déshydraté jusqu'à une température de réaction souhaitée,
(3) ajouter l'oxyde d'alkylène dans le deuxième réacteur sur une période de 2 à 10 heures, et
(4) après que la quantité totale d'oxyde d'alkylène est alimentée, laisser les contenus du réacteur réagir davantage jusqu'à ce que la pression dans le réacteur soit à niveau.

14. Procédé selon l'une quelconque parmi les revendications 1 à 13, dans lequel le second réacteur comprend un réacteur par lots.
